# EUROPEAN PATENT SPECIFICATION

(11) **EP 1 708 147 B1**
(45) Date of publication and mention of the grant of the patent: **24.07.2013**
(21) Application number: 05425191.3
(22) Date of filing: 01.04.2005
(51) Int. Cl.: G07F 7/02, G07F 7/08

(54) **Improved payment system with electronic key for dispensers of food products and/or drinks**
Verbessertes Zahlungssystem mit elektronischem Schlüssel für Ausgabevorrichtungen für Nahrungsmittel und/oder Getränke
Système de paiement amélioré avec clé électronique pour distributeurs d'aliments et/ou boissons

(43) Date of publication of application: 04.10.2006
(73) Proprietor: Conserve Italia Soc. Coop. A.R.L., 40068 San Lazzaro di Savena (Bologna) (IT)
(72) Inventor: Soragni, Stefano c/o Sirec Engineering S.r.l., 41012 Carpi (Modena) (IT)
(74) Representative: Ferreccio, Rinaldo

(56) References cited:
- EP-A- 0 545 549
- EP-A- 0 555 683
- EP-A- 0 793 204
- FR-A- 2 853 436
- US-A- 5 450 938

## Description

### Field of application

The present invention relates, in its more general aspect, to a dispenser of loose or packed food products and/or drinks such as fruit and vegetable juices and squashes, brews, food products and drinks packed in cartons, cans, plastics containers and the like.

In particular, but not limitatively, this invention relates to a dispenser as above being advantageously used in small communities such as, for example, public and private offices, schools, meeting rooms and similar places.

More specifically the invention relates to a payment system with electronic payment key for food product and/or drink dispensers and comprising at least one reading device of said electronic payment key.

### Prior art

The use of food product and/or drink dispensers is known in the art. The most complex dispensers manage the distribution of a plurality of food products and/or drinks, comprising in that case a button panel to select the food product and/or drink.

These dispensers are generally connected to a payment system: in that case the food product and/or drink is delivered by the dispenser only after receiving the payment and after selecting the product and/or drink by means of the proper button panel.

Generally these payment systems comprise a coin-box applied to the dispenser indifferently accepting coins, banknotes or the known payment key. In these payment systems the key is credited through the coin-box thus also serving as crediting device.

Nevertheless, the food product and/or drink dispensers committed to small communities such as, for example, public and private offices, schools, meeting rooms and similar places, are not equipped with a payment system.

These dispensers are generally arranged for the distribution of a limited number of products and/or drinks, the simplest ones providing the mono-product distribution.

These dispensers are generally enabled for the delivery by a sensor activated by the positioning of a glass. In other cases the delivery is activated by manually inserting a pod in the dispenser, and stopped, always manually, by a switch.

In all these cases the food product and/or drink dispenser does not comprise a payment system and, consequently, the delivery enabling is not subject to a consumption credit.

For this kind of dispensers it is also inconceivable to consider and develop ad hoc a payment system being as complex as known ones, since the payment system cost would not be advantageous if compared to the dispenser cost.

In the meantime, even supposing reasonable costs, the same small-sized dispensers would not be capable of adapting to a known coin-box payment system because of the area that this system would occupy in the dispenser casing.

Besides the above comments, it must be noted that the payment system maintenance is quite exacting since the restrocking man of the delivered food product and/or drink must attend, besides to restock, even to get back the cash inserted through the payment system.

The application No. FR 2 853 436 disclosed a distribution system comprising vending machine equipped with payment unit for permitting payment of food product by smart card, and recharging unit in management module to recharge the smart card. The technical problem underlying the present invention is to devise a payment system having such structural and functional features as to allow it to be associated with any kind of food product and/or drink dispenser, being particularly cheap and very versatile as for the installation and maintenance ease.

### Summary of the invention

The solution idea underlying the present invention is to provide a payment system as above indicated, wherein a reading device, capable of reading an electronic payment key and to scale down the residual credit, is also capable of recrediting it.

Said technical problem is solved by a payment system according to claim 1.

Further features and advantages of the payment system according to the invention will be apparent from the following description of an embodiment thereof given by way of indicative and non limiting example with reference to the attached drawings.

### Brief description of the drawings

Figure 1 shows a food product and/or drink dispenser having a payment system with electronic payment key realised according to the invention;
Figure 2 is a perspective view of the detail of the payment system of figure 1 and of the electronic payment key when being inserted;
Figure 3 schematically shows the reading device and the composing parts thereof;
Figures 4 and 4a show the electronic payment key respectively in a schematic view of the composing parts thereof and in a view showing the electronic key with the envelope thereof;
Figure 5 shows a block diagram describing the recognition and use steps of the three typologies of electronic keys by the reading device.

### Detailed description

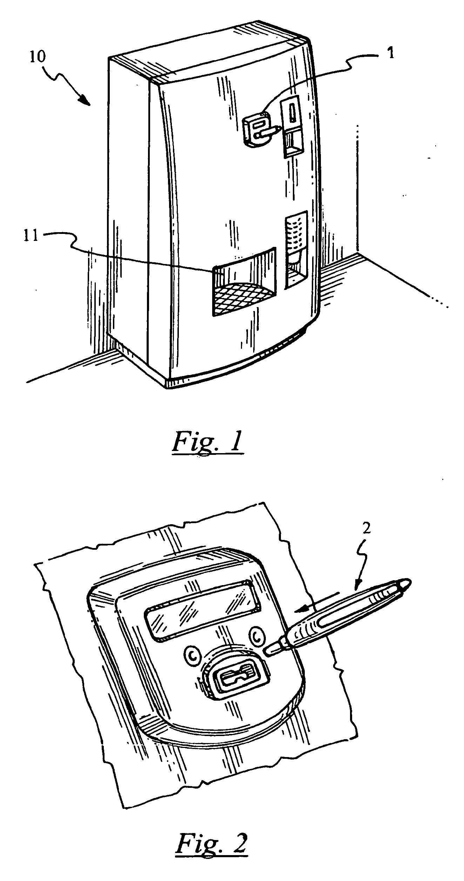

With reference to figure 1, a food product and/or drink dispenser as previously indicated is schematically shown and indicated with 10. In particular the point wherein the distribution of the food product and/or drink occurs is schematically indicated with 11, for example the delivery of a loose drink into a glass or other general container.

Said dispenser 10 is characterised by the limited physical size and by the average delivery capacity, being specifically suitable for the mono-product distribution.

Advantageously, according to the present invention, the dispenser 10 is equipped with a payment system 1 with electronic payment key 2 comprising at least one reading device 7 of said electronic payment key and also comprising means associated with the reading device 7 to enable and execute the recrediting of the electronic payment key 2 after the reader has recognised an electronic recredit key.

The electronic recredit key delivers into the reading device 7 a predetermined amount which is acquired by the electronic payment key 2 at the following insertion into the reading device 7.

More particularly the reading device 7 comprises a writing interface to recredit the electronic payment keys 2 and a driving interface of the food product and/or drink dispenser 10.

An electronic programming key is also provided to adjust the operation of the food product and/or drink dispenser 10; this third key is structurally identical to the electronic payment and recredit keys but it is different as for the informative content.

Figure 1 is a perspective view of a general food product and/or drink dispenser, globally indicated with 10. More particularly in the figure it is possible to note a payment system 1 realised according to the invention and embedded in the dispenser 10 or otherwise housed in a housing conveniently obtained near the dispenser 10.

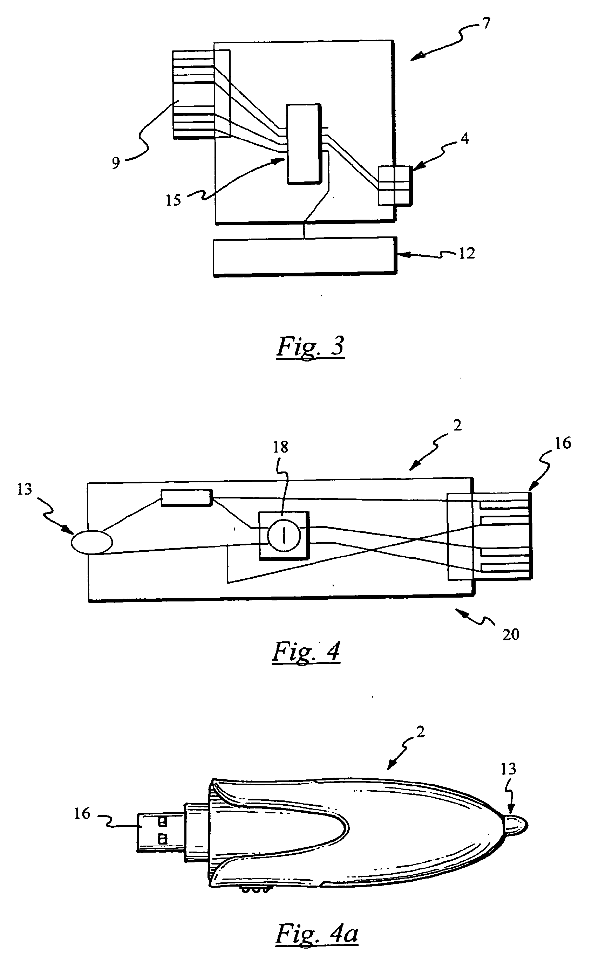

The detail of the payment system 1 and of the electronic payment key 2, when being inserted, is specified by the prospective view of figure 2 while a schematic representation thereof is shown in the box of figure 3.

The main components of the reading device are emphasized in that box, which are a microcontroller 15, a fast-coupling connector, for example of the RS232 type, indicated with 4, a backlighted display, for example of the liquid crystal LCD type, indicated with 12 and an interconnection port, for example an USB port indicated with 9.

As highlighted in the figure, inside the device 7 the microcontroller 15 is connected in a per se traditional way to the port 9, the connector 4 and the display 12. The reading device USB port 9 allows an electronic payment key 2 of the type schematically shown in figure 4 and globally indicated with 20 to be inserted.

The USB port 9 in figure 3 is the interface between the electronic keys 2 and the reading device 7 incorporated in the dispenser. In an embodiment of the present invention this communication port, as shown by figure 3, is a standard USB port but any other contact communication port can be actually used.

To this purpose it is specified that, although for the invention standard USB communication ports are used, the electronic payment keys cannot however be read by a normal USB-unit reader, such as for example the standard USB boards of a personal computer. In fact, a software protection has been adopted in the master communication protocol used by the reading device 7.

This structural specification of the electronic key 2 protects it from possible counterfeitings and extraneous programmings.

In particular the composing parts of the electronic key 2 are schematised in figure 4, which are a non volatile read and write memory, for example an E²Prom, indicated with 18, a communication port 16 with the payment system 1 and a light indicator 13, for example an activation led.

The memory 18 is connected to the communication port 16 of the payment system 1 by means of the contacts and it is also connected to the led 13 by means of internal connections. The communication port 16 is connected in turn to the led 13.

Electronic keys have not their own power supply but they are powered by the reading device 7 when being inserted in the interconnection port 9 and instantly deactivated when being removed.

Three typologies of so-structured electronic keys are provided:

A key to allow the food product or drink to be delivered hereafter indicated as "electronic payment key 2";

A key to recredit said electronic payment key, hereafter indicated as "electronic recredit key";

A key to program the payment system, hereafter indicated as "electronic programming key".

The three typologies of electronic keys are structurally and physically identical but they differ for the kind of identification code and for the informative/numerical content associated thereto.

For the electronic payment key 2 the informative content is simply the residual credit being useful to buy food products and/or drinks.

For the electronic recredit key the informative content is the recredit value of electronic payment keys 2 which can be performed, besides the residual credit being useful to buy new products. The latter information enables the electronic recredit key for being actually used as a normal electronic payment key 2.

Finally, for the electronic programming key, the informative content concerns the data which can be used to set the operation parameters of the food product and/or drink dispenser 10.

To this purpose, by way of non limiting example, the possibility to set, by means of the electronic programming key, the amount of product being delivered through the dispenser sensors will be mentioned.

In a particular embodiment of the present invention, the above-described reading device 7 can be used to realise a payment system being common to a plurality of food product and/or drink dispensers.

In that case the payment system 1 with the reading device 7 is connected in series to a plurality of dispensers which are simultaneously enabled to deliver the product by inserting a single electronic payment key 2. The product delivery of the first of the series-connected machines instantly disables the delivery of the remaining machines.

Similarly, through the same series connection of several dispensers associated with a single reading device, the programming functions of the single dispensers are enabled.

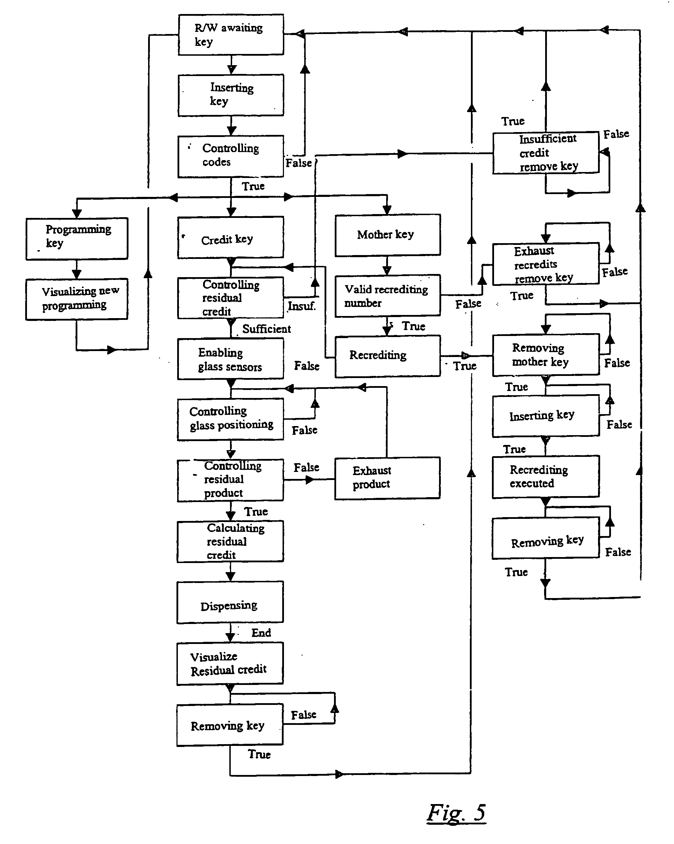

Figure 5 describes in a detailed way the flow chart of the payment method according to the present invention for the interaction between the three typologies of electronic keys and the reading device 7. In particular, when an electronic key is inserted in the reading device the following flow chart occurs:
1) Inserting the electronic key.
2) Reading the code comprised in the electronic key "A".

The reading device reads the code stored in the electronic key and it determines the typology to which it belongs: for example virgin and empty electronic key, electronic payment key 2, electronic recredit key or electronic programming key.
3) Controlling the electronic key "A" code.

The reading device controls the electronic key code stopping the procedure execution if the code is invalid (i.e. not associated to any typology), or else going on.
4) Reading the residual value for the electronic payment key 2.

If the key code identifies an electronic payment key 2, the reading device reads the stored residual credit value.
5) Reading the recredit value for the electronic recredit key.

If the key code identifies an electronic recredit key, the payment device reads the residual credit and the still-available recredit value.
6) Reading the electronic key label.

The reading device reads the identifying number stored in the electronic key.
7) Reading the number of insertions being performed with the electronic key.

The reading device reads the number of insertions being performed by the electronic key up to that moment.
8) Processing the "B" code.

The reading device processes the "B" code and it compares the processed code with the one being read by the electronic key.
9) Enabling or stopping.

If the two codes correspond and the electronic key being inserted is of the payment type, the dispenser is enabled. If the two codes correspond and the electronic key being inserted is of the recredit type, the machine is enabled for recrediting. If the two codes do not correspond, an error is indicated and the associated procedure is stopped.
10) Calculating the residual credit.

The delivery being selected, the reading device scales down, by means of the reading interface, the cost from the remainder if the electronic key is a payment key or it scales down the value from the recredits if the electronic key is a recredit key.
11) Calculating the new "B" code.

The reading device recalculates the code as above described and it stores it in the electronic key through the writing interface.

If an electronic programming key is inserted, after controlling the code of the typology to which it belongs, the reading device shifts to the setup area wherein the following data flow occurs:
1) Reading the serial number of the dispenser to be programmed, stored in the electronic programming key and univocally associated therewith.
2) Comparing said number stored in the electronic programming key with the serial number of the dispenser stored in the reading device 7 associated therewith.
3) Reading the identifying number of the electronic programming key.
4) Reading the number of programmings already performed.
5) Generating the "B" code by means of the reading device 7.
6) Comparing the "B" code being generated with the code stored in the electronic programming key.
7) Enabling the dispenser 10 for the setup step if the code being generated and the one stored in the electronic key correspond; otherwise stopping of the procedure.
8) Writing the new dispenser operation settings, by means of the setup data stored in the electronic programming key and the writing interface.
9) At the end of the programming, the number of programmings being performed is updated, the code "B" is recalculated and stored in the electronic programming key.

The payment system and method according to the present invention thus solve the technical problem and they achieve several advantages, the first is given by the fact that the maintenance of food product and/or drink dispensers is considerably simplified and it allows the electronic key payment system also for mono-product dispensers with small or medium delivery capacities.

Moreover, the system according to the invention avoids equipping small and medium-sized dispensers with coin-boxes and cash collection tanks.

## Claims

1. An improved payment system (1) with electronic payment key (2) for food product and/or drink dispensers (10), comprising at least a reading device (7) of said electronic payment key (2) able to scale down a residual credit of said electronic payment key (2) to enable the delivery of at least a product, **characterised in that** it comprises means associated with said reading device (7) to enable and execute the recrediting of said electronic payment key (2) after said reader (7) has recognised an electronic recredit key; **in that** said reading device (7) comprises a writing interface to recredit said electronic payment key (2); and **in that** said electronic recredit key delivers in said reading device (7) a predetermined amount to recredit said electronic payment key (2) which is acquired by said electronic payment key (2) at the following insertion into the reading device (7), said electronic payment key (2) and electronic recredit key being structurally identical.

2. A system according to claim 1, **characterised in that** the recredit key comprises a memory with a different informative content.

3. A system according to claim 1, **characterised in that** said means comprise an electronic programming key to adjust the operation of said food product and/or drink dispenser (10), being structurally identical to said electronic payment key (2) and electronic recredit key.

4. A system according to claim 3, **characterised in that** the delivery function of said food product and/or drink dispenser (10) is interrupted after inserting said electronic programming key in said reading device (7).

5. A system according to claim 1, **characterised in that** said means comprise a driving interface of the food product and/or drink dispenser (10), coupled thereto by means of a fast-coupling connector (4).

6. A system according to claim 5, **characterised in that** said driving interface drives a plurality of said food product and/or drink dispensers (10).

7. A system according to claim 2, **characterised in that** said electronic recredit key and said electronic payment key (2) comprise a led (13) indicating the activation/ deactivation condition thereof.

8. A system according to claim 7, **characterised in that** said electronic recredit key and said electronic payment key (2) are in said activation/deactivation condition when they are inserted in/removed from said reading device (7) respectively.

9. A system according to claim 2, **characterised in that** said electronic recredit key and said electronic payment key (2) comprise a non volatile read/write memory (18) to store the residual recredit and payment capacity.

10. A system according to claim 9, **characterised in that** said non volatile read/write memory (18) is an E²Prom.

11. A system according to claim 2, **characterised in that** said electronic recredit key and said electronic payment key (2) comprise a communication port (16) to be coupled to said reading device (7).

12. A system according to claim 11, **characterised in that** said communication port (16) is a contact communication port of the USB type.

13. A system according to claim 1, **characterised in that** said reading device (7) comprises a LCD display (12) indicating the operating condition thereof: on or stand-by.

14. A system according to claim 3, **characterised in that** said electronic programming key comprises a non volatile read/write memory (18) to store programming data of the food product and/or drink dispenser (10).

15. A system according to claim 2, **characterised in that** said electronic recredit key is capable of be used as an electronic payment key (2) for the direct activation of the food product and/or drink dispenser (10) .

16. A payment and delivery method of food products and/or drinks (10) comprising at least a reading device (7) of electronic payment keys (2) providing the insertion of said key (2) in said device (7) able to scale down a residual credit of said electronic payment key (2) and to enable the delivery of at least one product, **characterised in that** it provides at least two different typologies of electronic keys being structurally identical, an electronic payment key (2) and an electronic recredit key and **in that** it also provides:
controlling the inserted electronic key;
enabling the reading device (7) for a recredit of a predetermined amount, delivered in said reading device (7) by the electronic recredit key, once the electronic recredit key is recognised;
performing the enabled recredit, once the insertion in the reading device (7) of the electronic payment key (2) is recognised by means of a writing interface comprised in said reading device (7), said predetermined amount being acquired by said electronic payment key (2) at the following insertion into the reading device (7).

17. A method according to claim 16, **characterised in that** it further provides the use of an electronic programming key being structurally identical to said electronic payment key (2) and electronic recredit key and:
Controlling the inserted electronic key;
Reading the parameters to adjust the operation of said food product and/or drink dispenser (10);
Updating the operation parameters of said food product and/or drink dispenser (10) once said electronic programming key is recognised.

## Patentansprüche

1. Verbessertes Zahlungssystem (1) mit elektronischem Zahlungsschlüssel (2) für Ausgabevorrichtungen für Nahrungsmittel und/ oder Getränke (10), umfassend mindestens eine Lesevorrichtung (7) des elektronischen Zahlungsschlüssels (2), die geeignet ist, ein Restguthaben des elektronischen Zahlungsschlüssels (2) zu verkleinern, um die Lieferung mindestens eines Produkts zu ermöglichen,
**dadurch gekennzeichnet, dass**
es Einrichtungen umfasst, die mit der Lesevorrichtung (7) verbunden, um das Gutschreiben des elektronischen Zahlungsschlüssels (2) zu ermöglichen und auszuführen, nachdem der Leser einen elektronischen Guthabenschlüssel erkannt hat, dass die Lesevorrichtung (7) eine Schreibschnittstelle umfasst, um den elektronischen Zahlungsschlüssel (2) gutzuschreiben; und dass der elektronische Guthabenschlüssel in der Lesevorrichtung (7) einen vorbestimmten Betrag liefert, um den elektronischen Zahlungsschlüssel (2) gutzuschreiben, welcher durch den elektronischen Zahlungsschlüssel (2) bei der darauffolgenden Einführung in die Lesevorrichtung (7) erworben wird, wobei der elektronische Zahlungsschlüssel (2) und der elektronische Guthabenschlüssel strukturell identisch sind.

2. System nach Anspruch 1,
**dadurch gekennzeichnet, dass**
der Guthabenschlüssel einen Speicher mit einem unterschiedlichen Informationsgehalt umfasst.

3. System nach Anspruch 1,
**dadurch gekennzeichnet, dass**
die Einrichtungen einen elektronischen Programmierschlüssel umfassen, um die Funktion der Ausgabevorrichtung (10) für Nahrungsmittel und/oder Getränke einzustellen, wobei er strukturell identisch zu dem elektronischen Zahlungsschlüssel (2) und dem elektronischen Guthabenschlüssel ist.

4. System nach Anspruch 3,
**dadurch gekennzeichnet, dass**
die Lieferfunktion der Ausgabevorrichtung (10) für Nahrungsmittel und/oder Getränke unterbrochen ist nach Einführen des elektronischen Programmierschlüssels in die Lesevorrichtung (7).

5. System nach Anspruch 1,
**dadurch gekennzeichnet, dass**
die Einrichtungen eine Antriebsschnittstelle der Ausgabevorrichtung (10) für Nahrungsmittel und/oder Getränke umfassen, welche mit Hilfe eines Schnellkoppelverbinders (4) damit verbunden ist.

6. System nach Anspruch 5,
**dadurch gekennzeichnet, dass**
die Antriebsschnittstelle eine Vielzahl an Ausgabevorrichtungen (10) für Nahrungsmittel und/oder Getränke antreibt.

7. System nach Anspruch 2,
**dadurch gekennzeichnet, dass**
der elektronische Guthabenschlüssel und der elektronische Zahlungsschlüssel (2) eine LED (13) umfassen, die den Aktivierungs-/Deaktivierungs-Zustand davon anzeigen.

8. System nach Anspruch 7,
**dadurch gekennzeichnet, dass**
der elektronische Guthabenschlüssel und der elektronische Zahlungsschlüssel (2) im Aktivierungs-/Deaktivierungs-Zustand sind, wenn sie in die Lesevorrichtung (7) eingesetzt sind bzw. aus dieser entfernt sind.

9. System nach Anspruch 2,
**dadurch gekennzeichnet, dass**
der elektronische Guthabenschlüssel und der elektronische Zahlungsschlüssel (2) einen nichtflüchtigen Lese-/Schreibspeicher (18) umfassen, um das Restguthaben und die Zahlungskapazität zu speichern.

10. System nach Anspruch 9,
**dadurch gekennzeichnet, dass**
der nichtflüchtige Lese-/Schreibspeicher (18) ein E²-PROM ist.

11. System nach Anspruch 2,
**dadurch gekennzeichnet, dass**
der elektronische Guthabenschlüssel und der elektronische Zahlungsschlüssel (2) einen Kommunikationsport (16) umfassen, der mit der Lesevorrichtung (7) zu verbinden ist.

12. System nach Anspruch 11,
**dadurch gekennzeichnet, dass**
der Kommunikationsport (16) ein Kontaktkommunikationsport vom USB-Typ ist.

13. System nach Anspruch 1,
**dadurch gekennzeichnet, dass**
die Lesevorrichtung (7) eine LCD-Anzeige (12) umfasst, die den Betriebszustand davon anzeigt: Ein oder Standby.

14. System nach Anspruch 3,
**dadurch gekennzeichnet, dass**
der elektronische Programmierschlüssel einen nichtflüchtigen Lese-/Schreibspeicher (18) umfasst, um Programmierdaten der Ausgabevorrichtung (10) für Nahrungsmittel und/oder Getränke zu speichern.

15. System nach Anspruch 2,
**dadurch gekennzeichnet, dass**
der elektronische Guthabenschlüssel dazu geeignet ist, als ein elektronischer Zahlungsschlüssel (2) für die direkte Aktivierung der Ausgabevorrichtung (10) für Nahrungsmittel und/oder Getränke verwendet zu werden.

16. Zahlungs- und Lieferungsverfahren für Nahrungsmittelprodukte und/oder Getränke (10), welches zumindest eine Lesevorrichtung (7) der elektronischen Zahlungsschlüssel (2), die das Einführen des Schlüssels (2) in die Vorrichtung (7) zur Verfügung stellt, die geeignet ist, ein Restguthaben des elektronischen Zahlungsschlüssels (2) zu verkleinern, um die Lieferung von mindestens einem Produkt zu ermöglichen,
**dadurch gekennzeichnet, dass**
es mindestens zwei verschiedene Typologien an elektronischen Schlüsseln, die strukturell identisch sind, einen elektronischen Zahlungsschlüssel (2) und einen elektronischen Guthabenschlüssel zur Verfügung stellt und dass es ebenso zur Verfügung stellt:
Steuern des eingeführten elektronischen Schlüssels;
Ermöglichen der Lesevorrichtung (7) eines Gutschreibens eines vorbestimmten Betrags, der in der Lesevorrichtung (7) durch den elektronischen Guthabenschlüssel geliefert wird, sobald der elektronische Guthabenschlüssel erkannt wird;
Durchführen des ermöglichten Guthabens, sobald die Einführung des elektronischen Zahlungsschlüssels (2) in die Lesevorrichtung (7) erkannt wird mit Hilfe einer Schreibschnittstelle, die in der Lesevorrichtung (7) umfasst ist, wobei der vorbestimmte Betrag durch den elektronischen Zahlungsschlüssel (2) bei der darauffolgenden Einführung in die Lesevorrichtung (7) erworben wird.

17. Verfahren nach Anspruch 16,
**dadurch gekennzeichnet, dass**
es weiterhin die Verwendung eines elektronischen Programmierschlüssels, der strukturell identisch zu dem elektronischen Zahlungsschlüssel (2) und dem elektronischen Guthabenschlüssel ist, zur Verfügung stellt, und:
Steuern des eingeführten elektronischen Schlüssels;
Lesen der Parameter, um die Ausgabevorrichtung (10) für Nahrungsmittels und/oder Getränke einzustellen;
Aktualisieren der Funktionsparameter der Ausgabevorrichtung (10) für Nahrungsmittel und/oder Getränke, sobald der elektronische Programmierschlüssel erkannt wird.

## Revendications

1. Système de paiement amélioré (1) avec clé de paiement électronique (2) pour distributeurs d'aliments et/ou boissons (10), comprenant au moins un appareil de lecture (7) de ladite clé de paiement électronique (2) capable de réduire un crédit résiduel de ladite clé de paiement électronique (2) pour permettre la distribution d'au moins un produit, **caractérisé en ce qu'**il comprend des moyens associés audit appareil de lecture (7) pour permettre et effectuer le re-crédit de ladite clé de paiement électronique (2) après que ledit lecteur (7) a reconnu une clé de re-crédit électronique; **en ce que** ledit appareil de lecture (7) comprend une interface d'écriture pour re-créditer ladite clé de paiement électronique (2) ; et **en ce que** ladite clé de re-crédit électronique délivre dans ledit appareil de lecture (7) un montant prédéterminé pour re-créditer ladite clé de paiement électronique (2) qui est enregistré par ladite clé de paiement électronique (2) lors de l'insertion suivante dans l'appareil de lecture (7), lesdites clé de paiement électronique (2) et clé de re-crédit électronique étant structurellement identiques.

2. Un système selon la revendication 1, **caractérisé en ce que** la clé de re-crédit comprend une mémoire avec un contenu informatif différent.

3. Un système selon la revendication 1, **caractérisé en ce que** lesdits moyens comprennent une clé de programmation électronique pour ajuster le fonctionnement dudit distributeur d'aliments et/ou boissons (10), étant structurellement identique auxdites clé de paiement électronique (2) et clé de re-crédit électronique.

4. Un système selon la revendication 3, **caractérisé en ce que** la fonction de distribution dudit distributeur d'aliments et/ou boissons (10) est interrompue après l'insertion de ladite clé de programmation électronique dans ledit appareil de lecture (7).

5. Un système selon la revendication 1, **caractérisé en ce que** lesdits moyens comprennent une interface de pilotage du distributeur d'aliments et/ou boissons (10), couplée à celui-ci au moyen d'un connecteur à couplage rapide (4).

6. Un système selon la revendication 5, **caractérisé en ce que** ladite interface de pilotage pilote une pluralité desdits distributeurs d'aliments et/ou boissons (10).

7. Un système selon la revendication 2, **caractérisé en ce que** ladite clé de re-crédit électronique et ladite clé de paiement électronique comprennent une led (13) indiquant l'état d'activation/de désactivation de celles-ci.

8. Un système selon la revendication 7, **caractérisé en ce que** ladite clé de re-crédit électronique et ladite clé de paiement électronique (2) sont dans ledit état d'activation/désactivation lorsqu'elles sont respectivement insérées dans/retirées dudit appareil de lecture (7).

9. Un système selon la revendication 2, **caractérisé en ce que** ladite clé de re-crédit électronique et ladite clé de paiement électronique (2) comprennent une mémoire (18) à lecture/écriture non volatile pour stocker le re-crédit résiduel et la capacité de paiement.

10. Un système selon la revendication 9, **caractérisé en ce que** ladite mémoire (18) à lecture/écriture non volatile est une E²Prom.

11. Un système selon la revendication 2, **caractérisé en ce que** ladite clé de re-crédit électronique et ladite clé de paiement électronique (2) comprennent un port de communication (16) destiné à être couplé audit appareil de lecture (7).

12. Un système selon la revendication 11, **caractérisé en ce que** ledit port de communication (16) est un port de communication de contact de type USB.

13. Un système selon la revendication 1, **caractérisé en ce que** ledit appareil de lecture (7) comprend un écran LCD (12) indiquant l'état de fonctionnement de celui-ci : en marche ou en veille.

14. Un système selon la revendication 3, **caractérisé en ce que** ladite clé de programmation électronique comprend une mémoire à lecture/écriture non volatile (18) pour stocker des données de programmation du distributeur d'aliments et/ou boissons (10).

15. Un système selon la revendication 2, **caractérisé en ce que** ladite clé de re-crédit électronique est adaptée à être utilisée comme une clé de paiement électronique (2) pour l'activation directe de la distribution d'aliments et/ou boissons (10).

16. Une méthode de paiement et de distribution d'aliments et/ou de boissons (10) comprenant au moins un appareil de lecture (7) de clés de paiement électroniques (2) prévoyant l'insertion de ladite clé (2) dans ledit appareil (7) capable de réduire un crédit résiduel de ladite clé de paiement électronique (2) et de permettre la distribution d'au moins un produit,
**caractérisée en ce qu'**elle fournit au moins deux typologies différentes de clés électroniques structurellement identiques, une clé de paiement électronique (2) et une clé de re-crédit électronique et **en ce qu'**il prévoit également de :
contrôler la clé électronique insérée ;
permettre à l'appareil de lecture (7) de re-créditer d'un montant prédéterminé,
délivré audit appareil de lecture (7) par la clé de re-crédit électronique, une fois que la clé de re-crédit électronique est reconnue;
réaliser le re-crédit permis, une fois que l'insertion dans l'appareil de lecture (7) de la clé de paiement électronique (2) est reconnue au moyen d'une interface d'écriture comprise dans ledit appareil de lecture (7), ledit montant prédéterminé étant enregistré par ladite clé de paiement électronique (2) lors de l'insertion suivante dans l'appareil de lecture (7).

17. Une méthode selon la revendication 16, **caractérisée en ce qu'**elle prévoit en outre l'utilisation d'une clé de programmation électronique qui est structurellement identique à ladite clé de paiement électronique (2) et à ladite clé de re-crédit électronique et de:
contrôler la clé électronique insérée;
lire les paramètres pour ajuster le fonctionnement dudit distributeur d'aliments et/ou boissons (10) ;
mettre à jour les paramètres de fonctionnement dudit distributeur d'aliments et/ou boissons (10) une fois que ladite clé de programmation électronique est reconnue.
